# FASCICULE DE BREVET EUROPEEN

(11) **EP 2 038 104 B1**
(45) Date de publication et mention de la délivrance du brevet: **12.01.2011**
(21) Numéro de dépôt: 07787335.4
(22) Date de dépôt: 10.07.2007
(51) Int. Cl.: B29C 65/00, B29C 70/54, B64G 1/22, C08G 59/68, C09J 163/10, B29C 65/78

(54) **ASSEMBLAGE DE PRÉIMPRÉGNÉS POUR LA RÉALISATION DE STRUCTURES, PAR EXEMPLE À DÉPLOIEMENT PAR GONFLAGE**
PREPREG-ANORDNUNG ZUR HERSTELLUNG VON STRUKTUREN, ZUM BEISPIEL WELCHE, DIE SICH DURCH AUFBLASEN ENTFALTEN
ASSEMBLY OF PREPREGS FOR PRODUCING STRUCTURES, FOR EXAMPLE ONES WHICH DEPLOY THROUGH INFLATION

(30) Priorité: 12.07.2006 FR 0652943
(43) Date de publication de la demande: 25.03.2009
(73) Titulaire: ASTRIUM SAS, 75216 Paris Cedex 16 (FR)
(72) Inventeur: DEFOORT, Brigitte, F-33160 Saint Medard En Jalles (FR); LACOUR, Dominique, F-33370 Tresses (FR); LE-COULS, Olivier, F-33160 Saint Medard En Jalles (FR)
(74) Mandataire: Ilgart, Jean-Christophe
(86) Numéro de dépôt international: PCT/EP2007/057061
(87) Numéro de publication internationale: WO 2008/006835

(56) Documents cités:
- FR-A1- 2 876 983
- US-A1- 2002 016 378

## Description

### DOMAINE TECHNIQUE

L'invention se rapporte à l'assemblage de préimprégnés. Le procédé d'assemblage selon l'invention peut être appliqué à la réalisation de structures de grande dimension nécessitant la connexion entre différents éléments structurels en résine, par exemple « bout à bout », et/ou de structures de forme complexe nécessitant la jonction entre deux éléments, par exemple de forme éventuellement différente. L'invention repose sur la polymérisation locale par irradiation des préimprégnés pour assurer un assemblage.

De manière plus spécifique, l'assemblage selon l'invention concerne des structures qui sont pliées, et, après assemblage, le matériau conserve une souplesse adaptée à un pliage compact.

L'invention concerne en particulier la réalisation de structures à base de préimprégnés, notamment susceptibles de se déployer, par exemple par gonflage, en particulier pour un usage spatial, et qui ne peuvent être réalisées en une seule pièce.

L'invention trouve notamment une application dans la réalisation sur terre d'ensembles de tronçons de tubes qui conservent une tenue mécanique suffisante pour résister aux ambiances de vol, et/ou des aptitudes au gonflage et à la rigidification dans l'espace.

### ÉTAT DE LA TECHNIQUE ANTÉRIEURE

La réalisation de dispositifs compacts et ultralégers, aptes à se déployer par gonflage après placement en orbite, a été envisagée dès le début de l'ère spatiale.

Ces dispositifs comprennent un ensemble de structures creuses, généralement tubulaires, qui sont constituées de membranes fines pliées de sorte à former un soufflet et dont le déploiement résulte de leur remplissage par un gaz sous pression comme l'azote, qui est stocké dans un réservoir attenant. Ces structures sont aussi connues sous le nom de « structures Gossamer ».

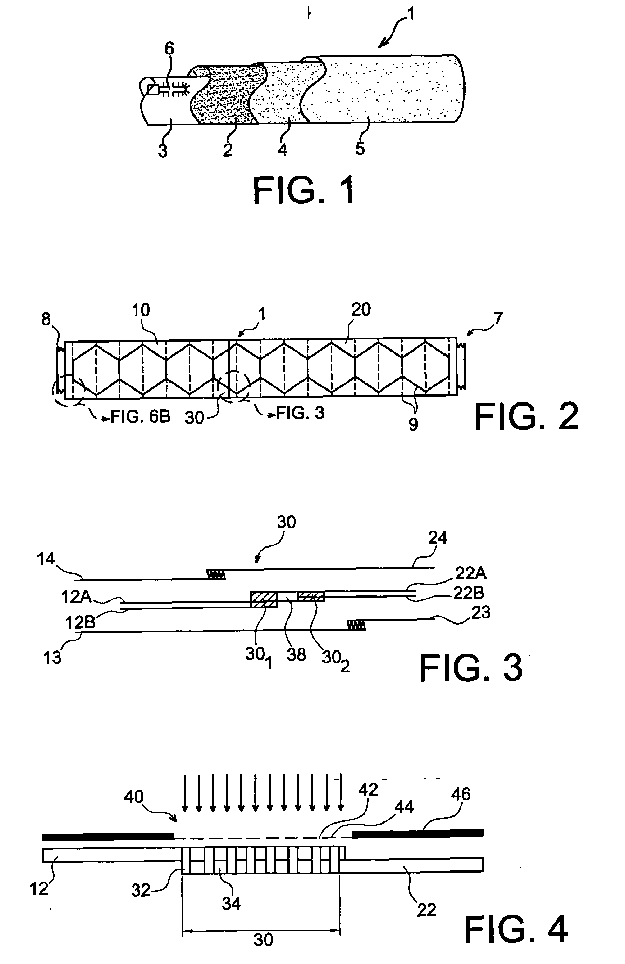

La figure 1 illustre sous une forme schématique le type de construction actuellement retenu pour une structure Gossamer destinée à être rigidifiée par polymérisation d'une résine induite par un rayonnement, et notamment les ultraviolets. Sur cette figure n'a été volontairement représentée qu'une portion de la structure à l'état déployé, de manière à rendre visibles les éléments qui la constituent.

Une structure Gossamer se présente sous la forme d'un tube 1 dont la paroi est formée par une membrane souple qui comprend une ou plusieurs épaisseurs d'un tissu 2 préimprégné d'une composition à base de résine, prises en sandwich entre deux films minces polymères 3, 4. Ces films 3, 4 ont pour fonction d'assurer l'étanchéité nécessaire au gonflage de la structure et d'éviter que le tissu imprégné 2 ne se colle sur lui-même lorsque la paroi est pliée avant déploiement, ce qui empêcherait, de fait, le déploiement de la structure. Dans le cas d'une structure Gossamer, les polymères constituant les films minces 3, 4 doivent répondre à des spécifications propres au domaine spatial : en particulier, les films doivent être capables de supporter des températures extrêmes et présenter des propriétés de résistance mécanique particulièrement élevées.

Une couverture thermique multicouche 5 complète éventuellement ce sandwich 2, 3, 4.

L'une des difficultés posées par la réalisation de structures Gossamer est liée à l'agressivité de l'environnement spatial. En effet, l'espace est chargé de micrométéorites susceptibles de percer toute membrane étanche et par là de provoquer des fuites et un dégonflage faisant perdre leur forme aux structures déployées. Il est donc nécessaire de les rigidifier après leur déploiement, par des techniques mécaniques, physiques ou chimiques.

En particulier, les techniques chimiques visent à induire, par la température, les ultraviolets ou autre rayonnement, etc., la polymérisation d'une résine ; cette polymérisation peut être accélérée par des catalyseurs véhiculés par le gaz de remplissage, sauf dans le cas des structures Gossamer où une vessie interne étanche est prévue. De fait, la polymérisation d'une résine induite par un rayonnement serait l'une des voies de rigidification les plus intéressantes des structures Gossamer, tant en ce qui concerne la fiabilité de cette technique de rigidification, les coûts des matériaux utilisés et de leur mise en oeuvre, que les propriétés mécaniques des structures rigidifiées.

Ainsi par exemple, si la résine du film 2 est photopolymérisable, la structure 1 comporte par ailleurs une source de radiation adaptée, par exemple une lampe à ultraviolets, 6 qui est disposée à l'intérieur du tube 1. La composition 2 à base de résine photo-polymérisable comprend dans ce cas, outre un oligomère réactif correspondant à la molécule de base de la résine, au moins un photo-initiateur sensible à la radiation concernée, c'est-à-dire un composé qui se décompose lorsqu'il y est exposé pour produire des espèces chimiques dont le rôle est d'initier la polymérisation de la résine.

Une voie préférée est la polymérisation par lumière visible : une membrane particulièrement adaptée est décrite dans le document FR 2 876 983.

Cependant, la réalisation de structures de grande taille pose problème. En effet, la dimension des matières premières, à savoir les films 2, 3, 4, disponibles est limitée. De plus, la mise en forme des films afin de réaliser la pièce finale nécessite des outillages de fabrication, en particulier, pour une structure Gossamer 1, des mandrins de dégazage pour le pliage sous forme de soufflet ; ces outillages doivent rester dans des critères de taille et masse compatibles avec leur manutention et leur fiabilité : une flèche trop importante du mandrin est déconseillée.

Pour réaliser de telles structures, il apparaît ainsi nécessaire d'assembler plusieurs éléments structurels, par exemple deux portions de tube bout à bout.

La première technique envisagée concerne le collage des deux portions. Cependant, l'utilisation d'un matériau tiers est problématique, surtout dans le domaine spatial : la colle doit être parfaitement compatible avec les films 2, 3, 4 ; elle doit conserver l'étanchéité de la structure et ce également lors du pliage, du déploiement, de la rigidification, et des sollicitations mécaniques inhérentes à l'utilisation de la structure, et ce au niveau d'une circonférence du mât 1. En particulier, un matériau non polymérisé de type pli préimprégné 2 n'est pas facile à coller.

Plus généralement, ce problème d'assemblage se pose pour toute structure complexe, de type formation d'une sphère à partir de plis plans, assemblage tube/plan, ou tube/sphère, ou formation d'une structure à tubes multiples,... .

### EXPOSÉ DE L'INVENTION

L'invention se propose, sous un de ses aspects, de pallier les inconvénients des techniques d'assemblage existant.

L'invention a donc pour objectif de définir un procédé d'assemblage de tissus de préimprégné, permettant :
- d'assurer une tenue mécanique de la liaison suffisante pour des manipulations, voisine de la tenue du préimprégné initial,
- tout en conservant sa souplesse initiale au préimprégné,
- en étant compatible avec un pliage,
- et sans détériorer les propriétés de la résine d'imprégnation du préimprégné.

Un deuxième objectif de l'invention est de permettre la réalisation de pièces de grandes dimensions pour structures gonflables, ce qui nécessite que la liaison supporte aussi les efforts de gonflage, c'est-à-dire la tenue du tube à l'état gonflé, avant sa polymérisation de rigidification.

Tel qu'il est classique, le terme « préimprégné » (ou « *prepeg* » en anglais) concerne un matériau sous forme d'une nappe de tissu de fibres, imprégné d'une résine dont la polymérisation n'est pas terminée, par exemple une résine dite « à l'état B » lorsqu'elle est thermodurcissable. Les préimprégnés sont ensuite classiquement utilisés pour la fabrication des composites, après quoi le durcissement est complété.

Le principe de base de l'invention consiste à utiliser un préimprégné polymérisable au moins partiellement par rayonnement, c'est-à-dire susceptible de polymériser localement sans induire d'évolution de la résine adjacente non activée. Il est alors possible d'assurer un assemblage sans utilisation d'adhésif, en irradiant la zone de liaison, éventuellement en la --chauffant également. De façon surprenante, une optimisation de la géométrie, de la surface et de la disposition de la liaison collée, a permis de conserver la souplesse de la liaison et a montré une compatibilité avec un pliage.

L'invention concerne ainsi, sous l'un de ses aspects, une structure qui comprend deux éléments de préimprégné solidarisés l'un à l'autre sur une zone de jonction. La zone de jonction est caractérisée par la superposition des deux préimprégnés qui restent indépendants à l'exception de points discrets où les deux préimprégnés sont soudés l'un à l'autre, par réticulation ou polymérisation locale.

Avantageusement, la zone de jonction est composée d'au moins deux bandes d'assemblage parallèles traversant la structure, c'est-à-dire par exemple sur une largeur ou un périmètre du préimprégné suivant la géométrie de la structure, séparées entre elles par une zone dans laquelle les deux préimprégnés sont uniquement superposés ; chacune des bandes comprend des points discrets de polymérisation croisée des deux préimprégnés. Ainsi, la zone entre les bandes garde sa souplesse et permet notamment un pliage ; selon la géométrie du pliage, il peut y avoir une pluralité de zones de superposition simple se croisant, avec un dessin variable.

La géométrie des points discrets est de préférence telle que la projection sur un bord de la zone de jonction de ces points discrets forme une ligne continue. Dans le cas où plusieurs bandes d'assemblage sont présentes, de préférence, des lignes continues sont formées par la projection sur le bord de chaque bande de ses points discrets. Avantageusement, afin de garder une grande souplesse à l'assemblage, la projection sur le bord de chaque bande ne comprend qu'un seul point.

Ainsi, la structure selon l'invention peut comprendre des zones de pliure, par exemple pour former un soufflet, notamment une pliure dans chaque zone de jonction.

Par exemple, la structure est un élément tubulaire gonflable, susceptible d'être déployé dans l'espace et comprend les ancillaires adaptés, notamment les bases d'extrémité. La structure selon l'invention peut comprendre également un film protecteur au-dessus des deux portions de préimprégné, et/ou un film protecteur sur l'autre face. L'un des films notamment peut être étanche.

Le préimprégné selon l'invention comprend avantageusement une résine époxyde ou époxy-acrylate, et un photo-initiateur, choisi parmi les sels de complexe fer-arène de formule générale (I) dans laquelle A représente un groupe arène, tandis que X représente un anion non nucléophile :

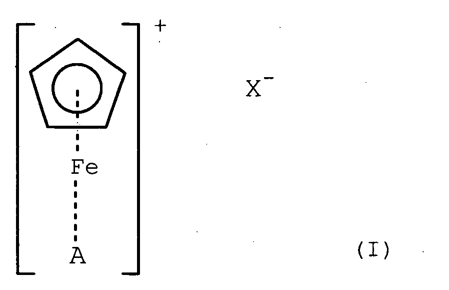

Sous un autre aspect, l'invention concerne un procédé d'assemblage permettant notamment la réalisation d'une structure telle que précédemment présentée. Le procédé d'assemblage selon l'invention comprend la superposition locale de deux éléments comprenant un préimprégné, puis l'irradiation en des points discrets de la zone de superposition afin d'effectuer une polymérisation locale sur une zone de jonction. L'irradiation est adaptée à la nature de la résine composant le préimprégné : en particulier, les structures comprennent une résine époxyde ou époxy-acrylate et un photo-initiateur choisi parmi les sels de complexe fer-arène de formule (I), l'irradiation étant effectuée au moyen d'une lumière visible.

Avantageusement, le procédé est effectué pour l'assemblage de structures tubulaires, et par l'intermédiaire d'un masque. Le masque comporte la géométrie adaptée au schéma des points discrets de jonction souhaité.

Selon un mode de réalisation préféré, le procédé d'assemblage est intégré au procédé de formation d'une structure de type Gossamer. En particulier, le procédé d'assemblage est effectué après que le premier élément structurel a été couplé à sa base, puis plié, afin de pouvoir prolonger le tube par un deuxième élément structurel. Une fois l'assemblage réalisé, il peut y avoir pliage de la deuxième partie de la structure tubulaire.

Sous un autre aspect, l'invention concerne un masque de polymérisation adapté au procédé précédent. De préférence, le masque est composé d'au moins deux parties d'irradiation, avantageusement sous -forme-de bandes, séparées entre elles par une partie opaque. Chaque bande d'irradiation comprend un nombre de points discrets localisés de façon plus ou moins aléatoire sur sa surface. De préférence, la projection sur l'un des côtés de la bande des points discrets forme une ligne continue ; cette projection est avantageusement telle que seul un point est présent à chaque fois.

Le masque peut contenir plusieurs bandes opaques qui se croisent de façon à former des zones non polymérisées dont le dessin dépend, par exemple, d'un pliage subséquent.

L'invention concerne enfin un mât de déploiement spatial, réalisé par le procédé précédant avec le masque prédéfini.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1, déjà décrite, illustre schématiquement une structure Gossamer, en position déployée et éclatée.
La figure 2 montre un mât de déploiement selon un mode préféré de réalisation de l'invention.
La figure 3 illustre la zone d'assemblage par un procédé selon l'invention.
La figure 4 représente le procédé d'assemblage selon l'invention.
La figure 5 montre un masque de polymérisation d'assemblage selon un mode de réalisation préféré de l'invention.
Les figures 6A à 6F décrivent un procédé de fabrication d'un mât de déploiement selon un mode de réalisation de l'invention.
Les figures 7A à 7C montrent d'autres structures obtenues par assemblage selon l'invention.

### EXPOSÉ DÉTAILLÉ DE MODES DE RÉALISATION PARTICULIERS

Bien que décrit ci-après pour la réalisation d'une structure tubulaire gonflable pour usage spatial, il apparaîtra clairement que ce mode de réalisation est illustratif. L'assemblage selon l'invention peut être appliqué à tous les cas où l'on souhaite réaliser des structures composites, de grande taille, planes ou tubulaires ou sphériques ou composées de différents éléments de même forme ou non, pliées ou non.

La structure concerne par exemple un mât de déploiement spatial 7 qui peut atteindre plus de 10 m de long pour un diamètre interne de 160 mm, illustré en figure 2. Le mât 7 se présente sous la forme d'un tube 1 à fine paroi solidarisé à chaque extrémité à un élément de base 8, usuellement en alliage d'aluminium ; le mât 7 forme un soufflet selon les zones de pliure 9 pour le lancement puis est déployé par gonflage une fois dans l'espace. Le matériau des parois d'un mât 7 de ce type doit résister à une force de traction de 2,4 N/mm pour une pression interne de 300 mbar.

Selon le mode de réalisation préféré, les parois du tube 1 1 gonflable peuvent notamment consister en :
- une vessie interne 3, par exemple en kapton® ou en Upilex®, assurant l'étanchéité au gaz de gonflage, notamment de l'azote ;
- un ou plusieurs plis 2 de composite verre/résine, deux dans le cadre préféré, qui donneront, après polymérisation, sa rigidité à la paroi ;
- une membrane externe 4, par exemple en kapton® aluminisé.

En particulier, et selon le mode de réalisation préféré, les plis 2 de composite sont des tissus préimprégnés se composant d'un matériau tel que décrit dans FR 2876983. Notamment, une résine époxy, par exemple de type DER 330™ ou DER 332™, est couplée à un photo-initiateur d'hexafluorophosphate de cyclopentadienyl 1-methyl-naphtalene ferrocénium de
formule II :

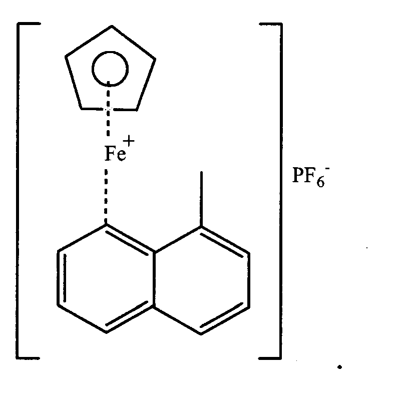

Un hexafluorophosphate de cyclopentadienyl benzène ferrocénium (formules III ou IV) peut également être préconisé.

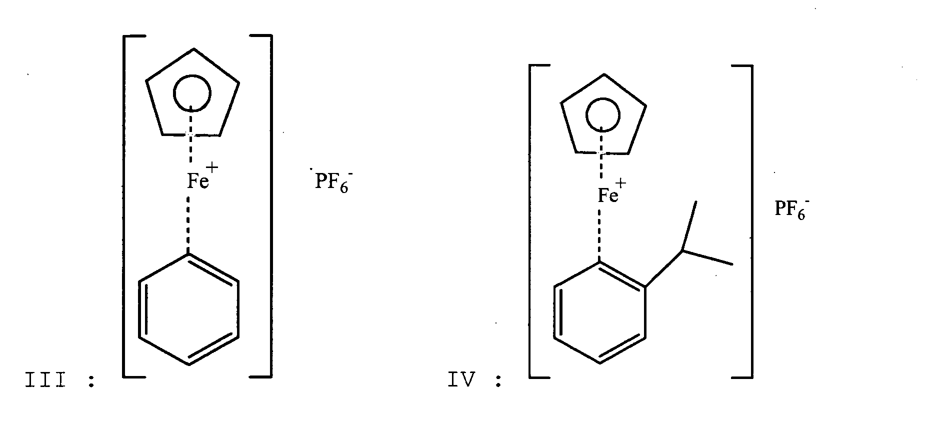

Il est bien sûr possible également d'utiliser un composite polymérisable partiellement au moins par ultraviolets, dont la résine est par exemple acrylate et le photo-initiateur sensible aux UV.

La réalisation du mât 7, en particulier le pliage 9 selon un dessin adapté, nécessite un outillage spécifique, qui ne peut atteindre cette longueur de 10 m. Ainsi, le mât 7 est séparé en un premier élément de structure 10 et un deuxième élément de structure 20, qui sont avantageusement de nature identique, par une zone de jonction 30.

Pour réaliser l'assemblage selon l'invention, afin de diminuer la zone de fragilité et d'éviter les surépaisseurs trop importantes, il est préférable d'effectuer une jonction « étagée » au niveau des différents films de la structure et illustrée en figure 3. En particulier, au niveau de l'extrémité du premier élément 10, la vessie interne 13 se prolonge au-delà des plis composite 12 qui eux-mêmes se prolongent au-delà du film externe 14 ; naturellement toute autre configuration serait possible, selon la nature de l'assemblage et le nombre de plis 2. La même géométrie inversée se retrouve sur le deuxième élément 20 qui sera assemblé bout à bout avec le premier, de sorte qu'il y a un recouvrement partiel deux à deux de chacun.des films.

La jonction entre les films externes 14, 24 et internes 13, 23 peut être réalisée de façon classique, notamment par un collage adapté ou une fusion thermique. La largeur de la superposition de chacun de ces films entre les deux éléments structurels 10, 20 est dimensionnée selon les critères connus, de façon à réaliser ce collage, par exemple sur 10 mm.

En ce qui concerne la partie composite 12, 22, un assemblage collé pose des difficultés, du fait de la non polymérisation du composant, et en particulier en raison des efforts qui y sont concentrés lors du déploiement.

Usuellement, une autre technique d'assemblage entre deux plis préimprégnés 2 est réalisée par polymérisation de sorte que la résine d'imprégnation joue en quelque sorte le rôle d'adhésif entre les différents plis : c'est ainsi que sont réalisés les empilements. Cependant, cette technologie s'accompagne automatiquement de la rigidification de l'ensemble, et ne peut être appliquée pour une structure Gossamer.

Selon l'invention, on utilise une polymérisation ponctuelle qui laisse suffisamment d'espace entre les points polymérisés afin de conserver toute leur souplesse aux préimprégnés. Cette possibilité est offerte par le choix d'une résine d'imprégnation sensible à une radiation, en particulier à la lumière ; de ce fait, le préimprégné comprend une résine photosensible qui pourra être cuite et permettre la rigidification de la structure une fois gonflée. En particulier, le préimprégné comprend avantageusement une résine époxyde ou époxy-acrylate, et un photo-initiateur, choisi parmi les sels de complexe fer-arène de formule générale (I) dans laquelle A représente un groupe arène, tandis que X représente un anion non nucléophile : 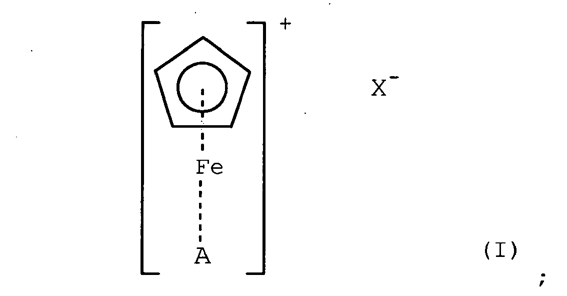 le matériau préféré comprend une résine époxy avec de l'hexafluorophosphate de cyclopentadienyl benzène ferrocénium ou de l'hexafluorophosphate de cyclopentadienyl 1-methyl-naphtalene ferrocénium.

La nature chimique du préimprégné offre ainsi la possibilité d'une réticulation locale du matériau composite. Cette polymérisation locale, effectuée au moyen d'un rayonnement sélectionné en fonction de la nature du préimprégné, permet une cohésion entre les deux couches de résine, liaison « soudée » parfaitement localisée et qui ne s'étend pas aux zones non irradiées.

Le principe selon l'invention est schématisé en figure 4 : le premier pli 12 et le deuxième pli 22, fabriqués en matériau préimprégné, c'est-à-dire que leur résine n'est pas polymérisée, se superposent localement sur une zone de jonction 30 ; une pression est appliquée pour un bon contact. Au-dessus de la jonction, on applique localement un masque 40 avec un dessin particulier comprenant des parties d'irradiation 42 et des parties opaques 44. L'ensemble est ensuite irradié, par de la lumière dans le cadre d'une résine photosensible partiellement telle que présentée précédemment. Selon le dessin du masque 40, éventuellement par chauffage additionnel, il y aura polymérisation de points particuliers 32, et cohésion des deux plis en regard, alors qu'entre deux points de soudure 32, ce qui correspond aux parties opaques 44 du masque 40, les deux plis 12, 22 n'interagissent pas et forment une simple superposition 34. Avantageusement, afin d'éviter tout début de rigidification, le masque 40 est prolongé par une protection opaque 46 permettant de s'assurer que l'irradiation ne concerne que les points de soudure 32.

A des fins de solidité, bien que ponctuelle, la polymérisation conserve de préférence une continuité à la jonction composite 30. Par contre, pour conserver sa souplesse à l'assemblage, les points 32, qui sont rigidifiés, doivent rester suffisamment petits et éloignés l'un de l'autre. Afin de réaliser ce type d'assemblage pour une structure Gossamer, la zone de recouvrement 30 entre les deux plis composites 12, 22 est prévue pour être suffisamment étendue pour que les points 32 puissent être disséminés de façon éloignée l'un de l'autre, c'est-à-dire distants d'au moins leur taille de leur prochain.

Il a été noté que, pour un composite tel que présenté plus haut, des points de polymérisation 32 de 4 mm de diamètre environ pouvaient facilement être obtenus, tout en conservant leur fonction lors du gonflage, et une relative souplesse aux feuilles lorsqu'ils sont suffisamment éloignés l'un de l'autre.

Etant donné que la zone de jonction 30 peut être relativement étendue et pour assurer la liaison, il est préférable de réaliser une jonction en deux parties, entre lesquelles il est possible de procéder par exemple à un pliage. En particulier, selon un mode de réalisation avantageux, la zone de jonction 30 peut être séparée en trois bandes parallèles, une première bande d'assemblage 30₁, une bande intermédiaire 38 dans laquelle les films composites 12, 22 sont juxtaposés et non soudés, c'est-à-dire conservant toute leur souplesse, et une deuxième bande d'assemblage 30₂.

Le pliage d'une structure peut par ailleurs être compliqué. Par exemple, pour un mât 7 illustré en figure 2, les traits de pliure peuvent former des hexagones coupés ; selon d'autres géométries, d'autres dessins plus ou moins complexes peuvent être envisagés. La zone de jonction 30 peut dans ces cas prévoir d'autres « bandes intermédiaires » destinées à former les zones où une pliure sera effectuées, les bandes 38 pouvant se croiser en des dessins variés.

Par ailleurs, si la couche composite 12, 22 intermédiaire est réalisée à partir de plusieurs films, et notamment deux tel qu'illustré sur la figure 3, il est avantageux de procéder à un étagement entre les différents films, avec notamment un croisement : le pli externe 22A du deuxième élément 20 est soudé sur sa partie d'extrémité avec les plis externe 12A et interne 12B du premier élément 10, et le pli interne 12B du premier élément 10 est solidarisé sur sa partie d'extrémité avec les plis externe 22A et interne 22B du deuxième élément 20. L'une des bandes intermédiaires 38 comprend alors la superposition uniquement des plis externes 12A, 22A des deux éléments structurels 10, 20.

Selon le mode de réalisation préféré présenté plus haut, on prévoit ainsi une zone de recouvrement 30 de 74 mm entre les plis composites 12, 22, avec une première bande 30₁ de 32 mm, une bande intermédiaire 38 de 10 mm, et une deuxième bande 30₂ de 32 mm. Pour le diamètre prévu de 160 mm, chaque bande 30₁, 38, 30₂ a une longueur de 126 mm.

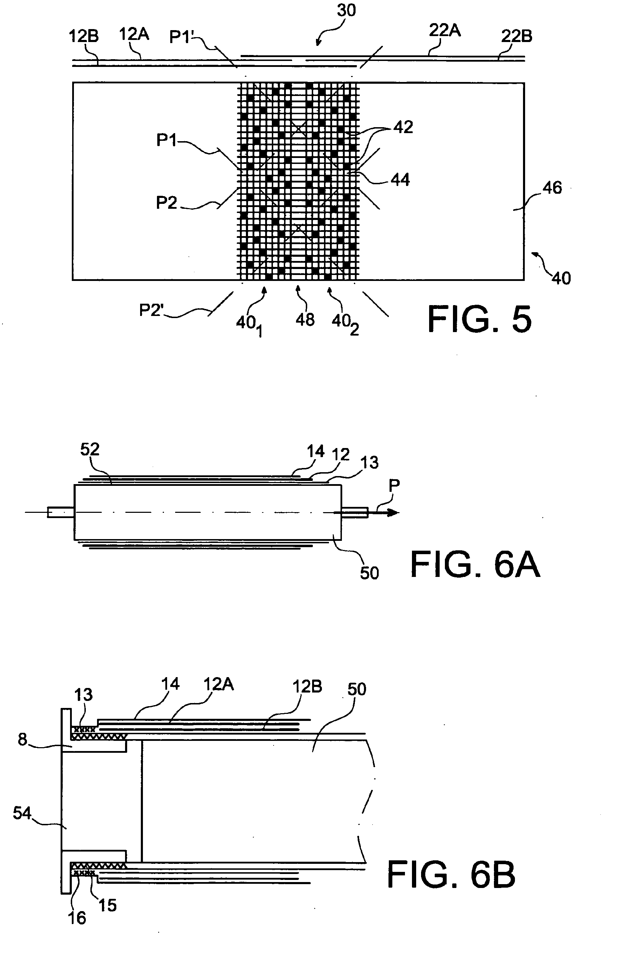

Un schéma pour un masque 40 de polymérisation adapté est illustré en figure 5 : les bandes d'irradiation 40₁, 40₂ sont ainsi « quadrillées » sur une largeur de huit zones possibles d'irradiation. Sur chaque largeur, un seul point d'irradiation 42 permettra la polymérisation, afin de conserver au maximum la souplesse de la bande d'assemblage 30, les points 42 étant par ailleurs aléatoirement distribués pour être masqués ou non par la lumière.

Plus généralement, selon un mode préféré de réalisation de l'invention, la polymérisation est effectuée de façon localisée et discrète sur une bande d'assemblage 30ᵢ d'une largeur prédéfinie et de longueur traversant les deux plis composite 12, 22 à assembler. La zone de jonction 30 est divisée en un quadrillage de points de soudage 32 dans les sens longitudinaux et latéraux. Le masque 40 est dessiné de sorte que la projection dans le sens de la longueur sur le bord 48 de la bande 40ᵢ de tous les carrés 42 qui sont polymérisés forme une ligne continue. Avantageusement, seul un carré 42 sur la largeur permettra la polymérisation, afin de rigidifier au minimum la structure.

En particulier par souci de sécurité, il peut être avantageux de doubler cette configuration, avec réalisation sur le masque 40 de deux parties d'irradiation 40₁, 40₂, identiques ou symétriques ou autres, séparées entre elles par une partie opaque 48 au rayonnement d'activation de la résine, de largeur dépendant de l'usage de la partie 38 correspondante sur l'assemblage, en particulier suffisante pour permettre un pliage, et 10 mm dans le mode de réalisation préféré.

De plus, tel que présenté plus haut, outre la partie opaque 48, le masque 40 peut comprendre d'autres parties opaques formant des bandes où une pliure est prévue. Ainsi, tel qu'illustré en figure 5, une pliure « carrée » est envisagée, et le masque 40 est conçu avec des bandes croisées destinées à former les pliures P1, P1', P2, P2'. Un schéma pour former le dessin de la figure 2 est naturellement également envisagé et partie de l'invention. Un masque selon l'invention comprend donc une pluralité de bandes d'irradiation séparées par des bandes opaques, ces bandes opaques formant un schéma prédéfini et optimisé.

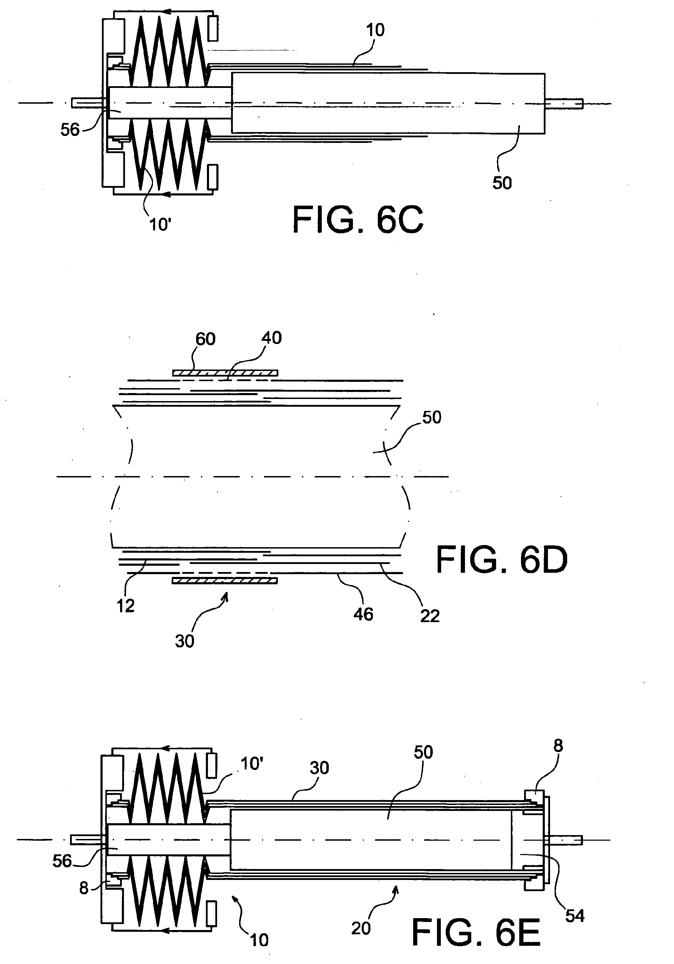

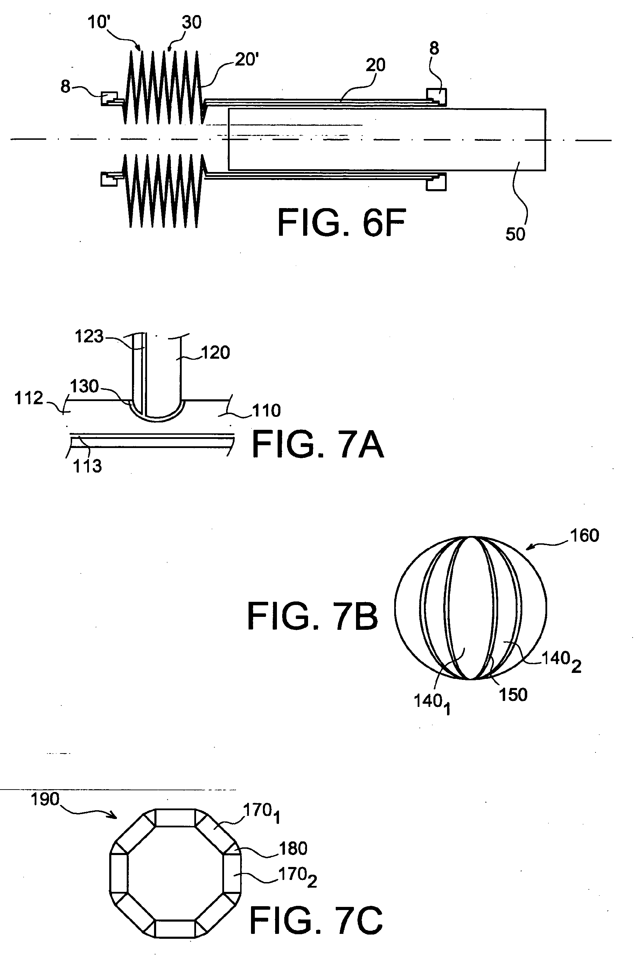

Un mode de réalisation d'un mât 7 selon l'invention est ainsi schématisé en figures 6.

Dans un premier temps (figure 6A), les différents films de matériau (à savoir vessie interne 13, plis composites 12A, 12B, et couche externe 14) sont enroulés autour d'un mandrin 50 ; leur formation cylindrique est réalisée tel qu'il est usuel dans ce domaine, par collage par exemple ou par un procédé selon l'invention. Le mandrin 50 comprend avantageusement des perforations 52 qui permettront un dégazage.

Dans un deuxième temps, la première extrémité du mât 7 est réalisée, par intégration à une première base 8, de préférence en alliage d'aluminium : figure 6B. Tel qu'il est usuel, un outil d'intégration 54 est couplé au mandrin 50 ; les films de matériau 12, 13, 14 sont agencés de façon à ce que les couches externe 14 et interne 13, destinées à la solidarisation sur la base 8, fassent saillie par rapport aux plis composite 12. On procède alors à un collage de la vessie interne 13 sur l'élément de base 8, et de la couche externe 14 sur la couche interne 13, en exerçant une pression sur l'adhésif 15 choisi ou en formant une soudure thermique 16.

Dans une troisième étape illustrée en figure 6C, l'ensemble des films 12, 13, 14 est plié, tel qu'il est usuel, et rétracté du mandrin 50. Un vide peut être appliqué par l'intermédiaire des perforations 52, de façon à plaquer la couche interne 13 sur le mandrin 50.

On obtient donc une base 8 de mât 7, qui est couplée à un soufflet 10' de structure composite, avantageusement stocké autour d'un outil 56 carré de stockage. Une extrémité de la structure composite 10' reste cependant non pliée et autour du mandrin 50. Usuellement, cette extrémité serait couplée à la deuxième base du mât 7.

Dans le cadre de l'invention, on veut réaliser un mât plus long. On procède alors à un assemblage de cette partie non pliée avec un deuxième élément 20 de nature similaire au premier. Le deuxième élément 20 est positionné autour du mandrin 50, du côté opposé au premier, avec un recouvrement partiel 30 entre les différentes couches des deux éléments structurels 10, 20 : figure 6D. Tel que précisé plus haut, il est préférable que ce recouvrement se fasse de façon étagée.

Afin de réaliser l'assemblage, au niveau de la jonction 30, un masque d'irradiation 40, par exemple celui de la figure 5, est positionné, de préférence associé à une couche de protection 46 contre la lumière sur les côtés du masque 40, afin d'être sûr de ne polymériser, éventuellement partiellement, la résine que sur les points préalablement définis 32. La zone de jonction 30 est irradiée à travers le masque 40, par exemple par l'intermédiaire d'un panneau électroluminescent 60 en lumière visible. Si la résine le nécessite, la polymérisation peut être complétée par un traitement thermique.

Avantageusement, les couches internes et externes 13, 14 sont elles aussi partiellement assemblées par l'intermédiaire de la chaleur.

Est ainsi obtenu un ensemble composé d'un premier élément de structure 10 solidarisé à une extrémité à une base de mât 8, puis plié en soufflet 10', puis enroulé autour du mandrin 50, et un deuxième élément de structure 20 enroulé autour du mandrin 50, les premiers et deuxièmes éléments 10, 20 étant superposés au niveau d'une zone d'assemblage 30 où ils sont partiellement joints.

Il est alors possible de continuer le pliage, de façon continue avec le pliage du premier élément 10, et en particulier en positionnant une pliure au niveau de la zone non polymérisée 38 entre les deux bandes de jonction 30₁, 30₂, ainsi qu'au niveau des autres zones non polymérisées issues des bandes P1, P1', P2, P2'.

Dans le cas d'un mât 7 composé de deux éléments de structure 10, 20, en particulier un mât d'une dizaine de mètres, l'extrémité extérieure du deuxième élément est intégrée à une base 8 (figure 6E), avant de réaliser le pliage (figure 6F).

Les tests ont montré que ce mode de réalisation permet d'obtenir un mât 7 remplissant les conditions requises pour un usage spatial tel qu'il est connu. De plus, aucune adaptation du matériel habituellement utilisé n'a été nécessaire : les mâts 7 ont été pliés et déployés en utilisant les outils habituels, en particulier le TADECS. Aucune influence de la zone d'assemblage 30 n'a été notée lors du pliage, ni lors du déploiement. Le comportement du mât réalisé selon le mode de réalisation précédent n'a pas été différent de celui d'un mât « normal » unitaire, de même que le profil de gonflage par pression n'a pas été modifié. Surtout, aucun endommagement n'a été observé sur le mât 7 lui-même au niveau de la zone d'assemblage 30. De fait, le collage de la membrane externe 14, 24 est le seul signe visible qu'une jonction entre deux éléments structurels séparés 10, 20 a été effectuée.

Le procédé selon l'invention remplit donc complètement les exigences dans le domaine aérospatial. Il permet notamment la réalisation d'un mât de longueur non limitée, sans augmentation des coûts du matériau.

Naturellement, il est possible d'envisager la jonction de plusieurs éléments bout à bout, afin de réaliser une structure encore plus longue. De plus, bien que présenté ici avec une résine photosensible au moins partiellement à la lumière pour une structure gonflable Gossamer, d'autres modes de réalisation sont possibles : le procédé d'assemblage selon l'invention permet une jonction étanche, sans adjonction de matériau, sur des préimprégnés, tout en leur conservant leurs caractéristiques de souplesse et de polymérisation futures. En particulier, plusieurs étapes du procédé décrit sont naturellement non obligatoires : la mise en place des embases d'extrémité ne concerne bien entendu que la réalisation de structures de déploiement de type Gossamer.

Bien que décrit autour d'un mandrin mis sous vide, la présence de ce dernier n'est pas indispensable. En particulier, l'objectif du mandrin est de faciliter le pliage du tube. Ceci concerne la structure précédente, ou plus généralement une structure en soufflet. Le procédé d'assemblage selon l'invention peut naturellement être utilisé sans qu'un pliage ne soit prévu.

De même, le procédé n'est pas limité à l'assemblage entre deux portions du tube : il est possible de souder ensemble deux éléments structurels plans. C'est pourquoi le collage des films plastiques externe et interne, afin de réaliser cette structure tubulaire, n'a pas été décrit, car il est connu de la personne du métier : la seule exigence est que l'adhésif utilisé soit compatible avec une utilisation dans l'espace, et en particulier, il ne doit pas dégazer sous vide.

Il est cependant possible, tel qu'illustré en figure 7A, d'utiliser un assemblage selon l'invention également pour fermer une structure tubulaire 110 : un préimprégné plan 112 peut être « refermé » sur lui-même et le bord de superposition 113 est soudé par un procédé d'assemblage selon l'invention.

La figure 7A illustre en outre une structure complexe qui peut être réalisée par un procédé selon l'invention : une première structure tubulaire 110 est couplée à une deuxième structure tubulaire 120 afin de former un T (ou tout autre angle autre que 90°, voire de former un Y) ; la deuxième structure tubulaire 120 peut également avoir été formée à partir un pli plan soudé par la polymérisation locale 123 précédente. La zone d'assemblage 130 est réalisée par un procédé selon l'invention. Naturellement, il est possible de doubler cette configuration, pour obtenir un X, ou tout autre forme.

Plus généralement, le procédé selon l'invention permet de réaliser toute structure, une fois que la zone d'assemblage, éventuellement de pliure, permet la définition d'un masque de polymérisation adapté. En particulier, tel qu'illustré en figure 7B, il est possible d'assembler des éléments plans préimprégnés 140₁, 140₂,... par des zones d'assemblage 150 et former ainsi une structure sphérique 160. L'assemblage de tubes 170ᵢ bout à bout par une zone de jonction 180 peut permettre, outre la réalisation d'un mât, la formation d'une structure fermée 190 de type tore illustrée en figure 7C. Ceci à titre d'exemples.

Même si, dans le cas de structures minces, la polymérisation par lumière ou UV est suffisante, pour des structures jusqu'à plusieurs centimètres d'épaisseur, il peut être préférable d'utiliser une polymérisation par électrons, avec toutes les technologies intermédiaires connues (rayons X en particulier). Ceci entre dans le cadre de l'assemblage selon l'invention.

Avantageusement cependant, les produits réalisés selon l'invention sont utilisés notamment pour la fabrication de dispositifs de type radars, panneaux solaires, réflecteurs, pare-soleil, antennes, miroirs ou voiles solaires, destinés à équiper des engins orbitaux tels que des satellites, des télescopes ou des stations orbitales, ou des engins d'exploration spatiale ou planétaire tels que des sondes ou des robots.

## Revendications

1. Procédé d'assemblage d'un premier élément structurel (10) et d'un deuxième élément structurel (20) selon une longueur d'assemblage prédéterminée, chacun des deux éléments comprenant au moins un pli de préimprégné (12, 22) polymérisable au moins partiellement sous un rayonnement prédéterminé, le procédé comprenant : la superposition des deux éléments (10, 20) sur une zone de jonction (30) de largeur prédéfinie sur la longueur à assembler, et l'irradiation par un rayonnement adapté au préimprégné (12, 22) de points discrets (32) d'une bande d'assemblage de la zone de jonction (30) de façon à obtenir une polymérisation locale croisée des deux préimprégnés (12, 22) sur cette bande.

2. Procédé selon la revendication 1 comprenant la mise en place d'un masque (40) comprenant des parties opaques (44) et des parties permettant le passage du rayonnement (42) sur la zone de jonction (30) préalablement à l'irradiation, et l'irradiation à travers le masque (40) de sorte que les points de polymérisation (32) sont donnés par la géométrie du masque (40).

3. Procédé selon l'une des revendications 1 ou 2 dans lequel la zone de jonction (30) peut être découpée en bandes d'assemblage (30₁, 30₂) où s'effectue la polymérisation locale, les bandes d'assemblage étant séparées par une bande intermédiaire (38, P1) où les deux couches de préimprégné ne sont pas polymérisées et restent juxtaposées.

4. Procédé selon la revendication 3 dans lequel la projection sur le bord longitudinal d'une bande d'assemblage (30₁) au moins des points discrets (32) de polymérisation forme une ligne continue.

5. Procédé selon l'une des revendications 1 à 4 dans lequel le préimprégné est formé d'un matériau fibreux imprégné d'une composition renfermant une résine époxyde ou époxy-acrylate et un photo-initiateur, choisi parmi les sels de complexes fer-arène de formule générale (I) : 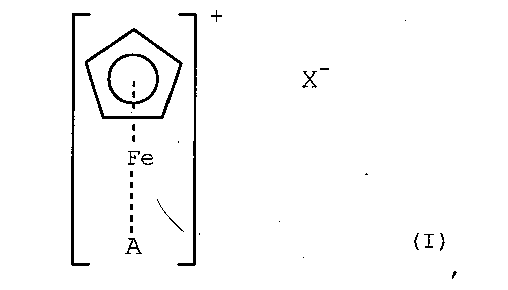 dans laquelle A représente un groupe arène, tandis que X représente un anion non nucléophile, et l'irradiation est effectuée au moyen de la lumière.

6. Procédé selon l'une des revendications 1 à 5 dans lequel les éléments structurels comprennent en outre au moins un film (3, 4) transparent au rayonnement sur une face du pli de préimprégné (12, 22).

7. Procédé selon l'une des revendications 1 à 6 dans lequel les éléments structurels (10, 20) sont tubulaires et comprenant le positionnement sur un mandrin (50) du premier élément (10) et du deuxième élément (20) bout à bout.

8. Procédé selon la revendication 7 comprenant en outre le pliage d'une portion d'extrémité (10') du premier élément (10) avant l'assemblage avec le deuxième élément (20).

9. Procédé selon la revendication 8 comprenant en outre le pliage, après assemblage, de la partie non pliée du premier élément (10), de la zone de jonction (30), et du deuxième élément (20).

10. Utilisation du procédé selon l'une des revendications 7 à 9 pour fabriquer une structure spatiale gonflable.

11. Structure comprenant un premier élément (10, 110, 140, 170) et un deuxième élément (20, 120, 140, 170), chacun comprenant un pli de préimprégné (12, 22) sensible à un rayonnement de polymérisation, le premier et le deuxième élément (10, 20, 110, 120, 140, 170) étant superposés au niveau d'une zone de jonction (30, 130, 150, 180), **caractérisée en ce que** la zone de jonction (30, 130, 150, 180) comprend une bande d'assemblage dans laquelle les premier et deuxième préimprégnés (12, 22) sont liés par polymérisation croisée au niveau de points discrets (32).

12. Structure selon la revendication 11 dans laquelle la zone de jonction (30) comprend des bandes d'assemblage (30₁, 30₂) séparées par une zone intermédiaire (38) dans laquelle les deux préimprégnés (12, 22) sont juxtaposés sans polymérisation réticulée.

13. Structure selon l'une des revendications 11 à 12 dans laquelle la projection des points discrets (32) sur le bord de chaque bande d'assemblage (30₁) traversant la structure forme une ligne continue.

14. Structure selon l'une des revendications 11 à 13 dans laquelle chacun des éléments (10, 20, 110, 120, 170) est tubulaire, la zone de jonction (30, 130, 180) s'étendant sur la circonférence d'un tube.

15. Structure selon l'une des revendications 11 à 14 dans laquelle au moins une partie est pliée en soufflet (10').

16. Structure selon la revendication 15 comprenant une pliure dans la zone de jonction (30).

17. Mât (7) de manipulation spatiale gonflable comprenant une structure selon l'une des revendications 15 à 16.

18. Masque d'irradiation (40) comprenant une partie d'irradiation (42) comprenant des points discrets de passage de rayonnement.

19. Masque selon la revendication 18 comprenant une première et une deuxième parties d'irradiation (40₁, 40₂), comprenant des points discrets de passage de rayonnement, séparées par une partie centrale opaque au rayonnement (48).

20. Masque selon l'une des revendications 18 ou 19 dans lequel la projection sur le bord de chaque partie d'irradiation (40₁) des points discrets (42) forme une ligne continue.

21. Masque selon la revendication 20 dans lequel seul un point discret (42) est présent sur la largeur de chaque partie d'irradiation.

22. Masque selon l'une des revendications 19 à 21 dans lequel les parties centrales opaques (48, P1, P2) forment un schéma prédéterminé pouvant servir de base à un pliage.

## Claims

1. Method of assembling a first structural element (10) and a second structural element (20) along a predetermined assembly length, each of the two elements comprising at least one prepreg ply (12, 22) polymerisable at least partially under a predetermined radiation, the method comprising: the superposition of the two elements (10, 20) on a junction zone (30) of predefined width over the length to be assembled, and the irradiation by a radiation suited to the prepreg (12, 22) of discrete points (32) of an assembly strip of the junction zone (30) so as to obtain a local cross polymerisation of the two prepregs (12, 22) on this strip.

2. Method according to claim 1 comprising the placement of a mask (40) comprising opaque parts (44) and parts enabling the passage of the radiation (42) on the junction zone (30) prior to the irradiation, and irradiation through the mask (40) in such a way that the polymerisation points (32) are given by the geometry of the mask (40).

3. Method according to one of claims 1 or 2 in which the junction zone (30) may be divided into assembly strips (30₁, 30₂) where local polymerisation takes place, wherein the assembly strips are separated by an intermediary strip (38, P1) where the two prepreg layers are not polymerised and remain juxtaposed.

4. Method according to claim 3 in which the projection on the longitudinal edge of an assembly strip (30₁) at least of discrete polymerisation points (32) forms a continuous line.

5. Method according to one of claims 1 to 4 in which the prepreg is formed of a fibrous material impregnated with a composition containing an epoxy or epoxy-acrylate resin and a photo-initiator, chosen among iron-arene complex salts of general formula (I): 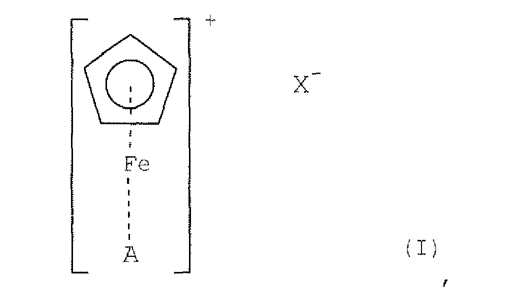 in which A represents an arene group, whereas X represents a non nucleophilic anion, and the irradiation is carried out by means of light.

6. Method according to one of claims 1 to 5 in which the structural elements further comprise at least one film (3, 4) transparent to the radiation on one face of the prepreg ply (12, 22).

7. Method according to one of claims 1 to 6 in which the structural elements (10, 20) are tubular and comprising the positioning on a mandrel (50) of the first element (10) and the second element (20) end to end.

8. Method according to claim 7 further comprising the folding of an end portion (10') of the first element (10) before the assembly with the second element (20).

9. Method according to claim 8 further comprising the folding, after assembly, of the non folded part of the first element (10), the junction zone (30), and the second element (20).

10. Use of the method according to one of claims 7 to 9 to manufacture an inflatable space structure.

11. Structure comprising a first element (10, 110, 140, 170) and a second element (20, 120, 140, 170), each comprising a prepreg ply (12, 22) sensitive to a polymerisation radiation, wherein the first and the second element (10, 20, 110, 120, 140, 170) are superimposed at the level of a junction zone (30, 130, 150, 180), **characterised in that** the junction zone (30, 130, 150, 180) comprises an assembly strip in which the first and second prepregs (12, 22) are bonded by cross polymerisation at the level of discrete points (32).

12. Structure according to claim 11 in which the junction zone (30) comprises assembly strips (30₁, 30₂) separated by an intermediate zone (38) in which the two prepregs (12, 22) are juxtaposed without cross-linking polymerisation.

13. Structure according to one of claims 11 to 12 in which the projection of discrete points (32) on the edge of each assembly strip (30₁) spanning the structure forms a continuous line.

14. Structure according to one of claims 11 to 13 in which each of the elements (10, 20, 110, 120, 170) is tubular, the junction zone (30, 130, 180) extending over the circumference of a tube.

15. Structure according to one of claims 11 to 14 in which at least a part is concertina folded (10').

16. Structure according to claim 15 comprising a fold in the junction zone (30).

17. Inflatable space manipulation pylon (7) comprising a structure according to one of claims 15 to 16.

18. Irradiation mask (40) comprising an irradiation part (42) comprising discrete radiation passage points.

19. Mask according to claim 18 comprising a first and a second irradiation parts (40₁, 40₂), comprising discrete radiation passage points, separated by a central part opaque to the radiation (48).

20. Mask according to one of claims 18 or 19 in which the projection on the edge of each irradiation part (40₁) of the discrete points (42) forms a continuous line.

21. Mask according to claim 20 in which only one discrete point (42) is present over the width of each irradiation part.

22. Mask according to one of claims 19 to 21 in which the central opaque parts (48, P1, P2) form a predetermined schema that can serve as base to a folding.

## Patentansprüche

1. Verfahren zum Zusammenfügen eines ersten Strukturelements (10) und eines zweiten Strukturelements (20) gemäß einer vorbestimmten Zusammenfügungslänge, wobei jedes der zwei Elemente wenigstens eine Lage eines Prepregs (12, 22) umfaßt, das unter einer vorbestimmten Strahlung wenigstens teilweise polymerisierbar ist, wobei das Verfahren umfaßt: die Überlagerung der zwei Elemente (10, 20) in einer Verbindungszone (30) vorbestimmter Breite auf der zusammenzufügenden Länge, und die Bestrahlung diskreter Punkte (32) eines Zusammenfügungsbands der Verbindungszone (30) mittels einer für das Prepreg (12, 22) geeigneten Strahlung derart, dass man eine lokale gekreuzte Polymerisation der zwei Prepregs (12, 22) auf diesem Band erhält.

2. Verfahren nach Anspruch 1, umfassend das Platzieren einer Maske (40), die opake Bereiche (44) sowie Bereich umfaßt, die den Durchtritt der Strahlung (42) erlauben, auf der Verbindungszone (30) vor der Bestrahlung, sowie die Bestrahlung durch die Maske (40) hindurch derart, dass die Polymerisationspunkte (32) durch die Geometrie der Maske (40) gegeben sind.

3. Verfahren nach einem der Ansprüche 1 oder 2, bei dem die Verbindungszone (30) in Zusammenfügungsbänder (30₁, 30₂) zerschnitten werden kann, wo die lokale Polymerisation erfolgt, wobei die Zusammenfügungsbänder durch ein Zwischenband (38, P1) getrennt sind, wo die zwei Schlichten des Prepregs nicht polymerisiert werden und nebeneinander angeordnet bleiben.

4. Verfahren nach Anspruch 3, bei dem die Projektion der diskreten Polymerisationspunkte (32) auf den longitudinalen Rand wenigstens eines Zusammenfügungsbands (30₁) eine durchgehende Linie bildet.

5. Verfahren nach einem der Ansprüche 1 bis 4, bei dem das Prepreg aus einem Fasermaterial gebildet ist, das imprägniert ist mit einer Verbindung, die ein Epoxid- oder ein Epoxy-Acrylat-Harz und einen Photoinitiator enthält, ausgewählt aus den Salzen von Eisen-Arenkomplexen der allgemeinen Formel (I): 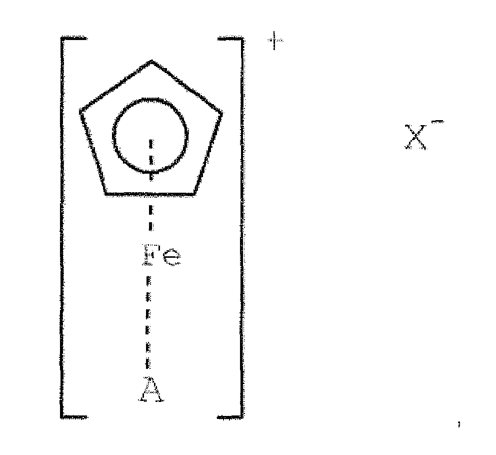 wobei A eine Arengruppe darstellt, wohingegen X ein nicht-nukleophiles Anion darstellt, und die Bestrahlung mittels Licht erfolgt.

6. Verfahren nach einem der Ansprüche 1 bis 5, bei dem die Strukturelemente ferner wenigstens einen für die Strahlung transparenten Film (3, 4) auf einer Fläche der Lage des Prepregs (12, 22) umfassend.

7. Verfahren nach einem der Ansprüche 1 bis 6, bei dem die Strukturelemente (10, 20) röhrenförmig sind, ferner umfassend die Positionierung des ersten Elements (10) und des zweiten Elements (20) Ende an Ende auf einem Dorn (50).

8. Verfahren nach Anspruch 7, ferner umfassend das Falten eines Endbereichs (10') des ersten Elements (10) vor dem Zusammenfügen mit dem zweiten Element (20).

9. Verfahren nach Anspruch 8, ferner umfassend, nach dem Zusammenfügen, das Falten des nicht-gefalteten Bereichs des ersten Elements (10), der Verbindungszone (30) sowie des zweiten Elements (20).

10. Verwendung des Verfahrens nach einem der Ansprüche 7 bis 9 zur Herstellung einer räumlichen aufblasbaren Struktur.

11. Struktur, umfassend ein erstes Element (10, 110, 140, 170) sowie ein zweites Element (20, 120, 140, 170), wobei jedes eine Lage eines Prepregs (12, 22) umfaßt, das für eine Polymerisationsstrahlung empfindlich ist, wobei das erste und das zweite Element (10, 20, 110, 120, 140, 170) im Bereich einer Verbindungszone (30, 130, 150, 180) überlagert sind, **dadurch gekennzeichnet, dass** die Verbindungszone (30,130, 150, 180) ein Zusammenfügungsband umfaßt, in dem das erste und das zweite Prepreg (12, 22) mittels gekreuzter Polymerisation im Bereich von diskreten Punkten (32) verbunden sind.

12. Struktur nach Anspruch 11, bei der die Verbindungszone (30) Zusammenfügungsbänder (30₁, 30₂) umfaßt, die durch eine Zwischenzone (38) getrennt sind, in der die zwei Prepregs (12, 22) ohne vernetzte Polymerisation nebeneinander angeordnet sind.

13. Struktur nach einem der Ansprüche 11 bis 12, bei der die Projektion der diskreten Punkte (32) auf den Rand jedes Zusammenfügungsbands (30₁), das die Struktur durchläuft, eine durchgehende Linie bildet.

14. Struktur nach einem der Ansprüche 11 bis 13, bei der jedes der Elemente (10, 20, 110, 120, 170) röhrenförmig ist, wobei sich die Verbindungszone (30, 130, 180) über den Umfang eines Rohrs erstreckt.

15. Struktur nach einem der Ansprüche 11 bis 14, bei der wenigstens ein Bereich als Balg (10') gefaltet ist.

16. Struktur nach Anspruch 15, umfassend eine Faltung in der Verbindungszone (30).

17. Aufblasbarer Mast (7) zur räumlichen Handhabung, umfassend eine Struktur nach einem der Ansprüche 15 bis 16.

18. Bestrahlungsmaske (40), umfassend einen Bestrahlungsbereich (42), der diskrete Punkte für einen Strahlungsdurchtritt umfaßt.

19. Maske nach Anspruch 18, umfassend einen ersten und einen zweiten Strahlungsbereich (40₁, 40₂), umfassend diskrete Punkte für den Strahlungsdurchtritt, die durch einen zentralen Bereich getrennt sind, der für die Strahlung opak ist (48).

20. Maske nach einem der Ansprüche 18 oder 19, bei dem die Projektion der diskreten Punkte (42) auf den Rand jedes Bestrahlungsbereichs (40₁) eine durchgehende Linie bildet.

21. Maske nach Anspruch 20, bei der nur ein diskreter Punkt (42) über die Breite jedes Bestrahlungsbereichs vorhanden ist.

22. Maske nach einem der Ansprüche 19 bis 21, bei der die zentralen opaken Bereiche (48, P1, P2) ein vorbestimmtes Schema bilden, das als Basis für eine Faltung dienen kann.
